**Europäisches Patentamt**

**European Patent Office**

**Office européen des brevets**

(11) Veröffentlichungsnummer: **0 383 812 B1**

(12) **EUROPÄISCHE PATENTSCHRIFT**

(45) Veröffentlichungstag der Patentschrift:
25.09.91 Patentblatt 91/39

(51) Int. Cl.$^5$: **B65D 63/14**

(21) Anmeldenummer: **88909492.6**

(22) Anmeldetag: **11.11.88**

(86) Internationale Anmeldenummer:
**PCT/AT88/00094**

(87) Internationale Veröffentlichungsnummer:
**WO 89/04281 18.05.89 Gazette 89/11**

(54) **BEFESTIGUNGSBAND.**

(30) Priorität: **13.11.87 AT 3013/87**

(43) Veröffentlichungstag der Anmeldung:
**29.08.90 Patentblatt 90/35**

(45) Bekanntmachung des Hinweises auf die
Patenterteilung:
**25.09.91 Patentblatt 91/39**

(84) Benannte Vertragsstaaten:
**AT BE CH DE FR GB IT LI NL SE**

(56) Entgegenhaltungen:
**CH-A- 405 131**

(56) Entgegenhaltungen:
**DE-A- 1 486 292**
**DE-B- 1 085 809**
**DE-C- 225 611**
**GB-A- 1 131 346**

(73) Patentinhaber: **Payer, Hermann**
**Seidlgasse 29/9**
**A-1030 Wien (AT)**

(72) Erfinder: **Payer, Hermann**
**Seidlgasse 29/9**
**A-1030 Wien (AT)**

(74) Vertreter: **Kliment, Peter, Dipl.-Ing. Mag.-jur.**
**Singerstrasse 8/3/8**
**A-1010 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Befestigungsband zum Verschnüren und Befestigen mindestens eines Gegenstandes oder zum Bündeln mehrerer Gegenstände mit zumindest einem mit dem Abbindegut in Eingriff bringbaren, als Haken ausgebildeten Kopfteil, welcher einen Hakenschenkel und einen ein Verrastungselement tragenden Hakenschaft aufweist, und mit einem ein oder mehrere Rastenelemente aufweisenden, zugelastischen Umschlingungsteil, wobei die Rastenelemente einzeln und lösbar an dem Verrastungselement des Kopfteiles verankerbar sind.

Eine derartige Konstruktion ist durch die CH-A-405131 (GRABHER) bekannt. Eine Öse eines Elastikbandes wird exakt über einer Einhängenase des Kopfteiles plaziert. Zum ringförmigen Schließen dieses Haltebandes muß die Öse erweitert werden, damit die Öse über die Einhängenase gehängt werden kann, was nur mit Kraftaufwand möglich ist.

Weitere ähnliche Konstruktionen sind bekannt geworden (DE-B-1085809, ALL-PLASTIC), (DE-A-1486292, CALOR), die jedoch nicht zugelastisch ausgebildet sind.

Die Aufgabe der vorliegenden Erfindung ist es, ein zugelastisches Befestigungsband der eingangs erwähnten Art zu schaffen, dessen Handhabung während des Verschnürens, Bündelns oder Befestigens einfacher und müheloser durchgeführt werden kann, als dies mit den bisher bekannten Bauformen möglich ist.

Diese Aufgabe wird dadurch gelöst, daß am Hakenschaft des Kopfteiles zumindest ein Einführungsschlitz vorgesehen ist, der das Verrastungselement bildet, oder daß das Verrastungselement durch den Bereich zwischen Hakenschenkel und Hakenschaft gebildet wird, wobei der jeweils einem Rastenelement benachbarte Bereich des Umschlingungsteiles unter Zugbeanspruchung in den Einführungsschlitz oder in den Bereich zwischen Hakenschenkel und Hakenschaft einführbar und verankerbar ist.

In weiterer Ausgestaltung des Befestigungsbandes kann der Hakenschaft eine Fortsetzung aufweisen, die mit dem Einführungsschlitz ausgestattet ist, durch welchen der zwischen zwei Rastenelementen befindliche Bereich des Umschlingungsteiles einführbar ist.

In weiterer Ausgestaltung kann der Einführungsschlitz in eine am Hakenschaft angeordnete, mit einer Querwand versehene Hülse münden, wobei die Hülse zum Einführen der Rastenelemente ausgebildet ist. Diese Bauart eignet sich insbesondere für höhere Zuglasten, da hierbei keine seitlichen Zugkräfte auf den Hakenschaft einwirken.

In weiterer Ausgestaltung kann der Hakenschaft zwei Einführungsschlitze aufweisen, die dermaßen angeordnet sind, daß der Umschlingungsteil in den einen Einführungsschlitz in Richtung des Hakenschenkels einführbar ist und daß der Umschlingungsteil in den anderen Einführungsschlitz von der Richtung des Hakenschenkels her einführbar ist. Diese Bauart zweier entgegengesetzt ausgerichteter, am Hakenschaft angeordneter Einführungsschlitze eignet sich insbesondere für Anwendungsfälle, bei welchen zwei im Abstand voneinander befindliche Gegenstände zusammengespannt werden sollen.

Nach einem anderen Merkmal kann der Einführungsschlitz mit einer Lösehemmungseinrichtung ausgebildet sein, welche ein unbeabsichtigtes Herausgleiten des Umschlingungsteiles aus dem Einführungsschlitz verhindern soll.

In weiterer Ausgestaltung der Erfindung kann der Kopfteil eine Einhaksicherung nach Karabinerart aufweisen.

Nach einem weiteren nicht näher dargestellten Merkmal kann am Befestigungsband an jedem der beiden Enden ein Kopfteil ausgebildet sein.

Nach einem anderen Merkmal kann der Umschlingungsteil in einem auf die Rastenelemente abgestimmten zwischen Hakenschenkel und Hakenschaft gebildeten Bereich verankerbar sein.

Anhand der Zeichnungen sollen nun drei Ausbildungsformen des Kopfteiles näher beschrieben werden.

Figur 1 zeigt die schematische Darstellung eines zwischen zwei Gegenständen gespannten Befestigungsbandes, wobei der Kopfteil eine Fortsetzung mit zwei Einführungsschlitzen aufweist.

Figur 2 zeigt den schematischen Schrägriß eines zwischen zwei Gegenständen gespannten Befestigungsbandes, wobei der Haken eine Einhaksicherung nach Karabinerart aufweist und der Einführungsschlitz in eine am Hakenschaft angeordnete Hülse mündet.

Figur 3 zeigt die schematische Abbildung eines Kopfteiles in Arbeitsstellung mit zwei am Hakenschaft angeordneten Einführungsschlitzen, wobei der Haken eine Einhaksicherung nach Karabinerart aufweist und der Umschlingungsteil zwischen Hakenschenkel und Hakenschaft verankert ist.

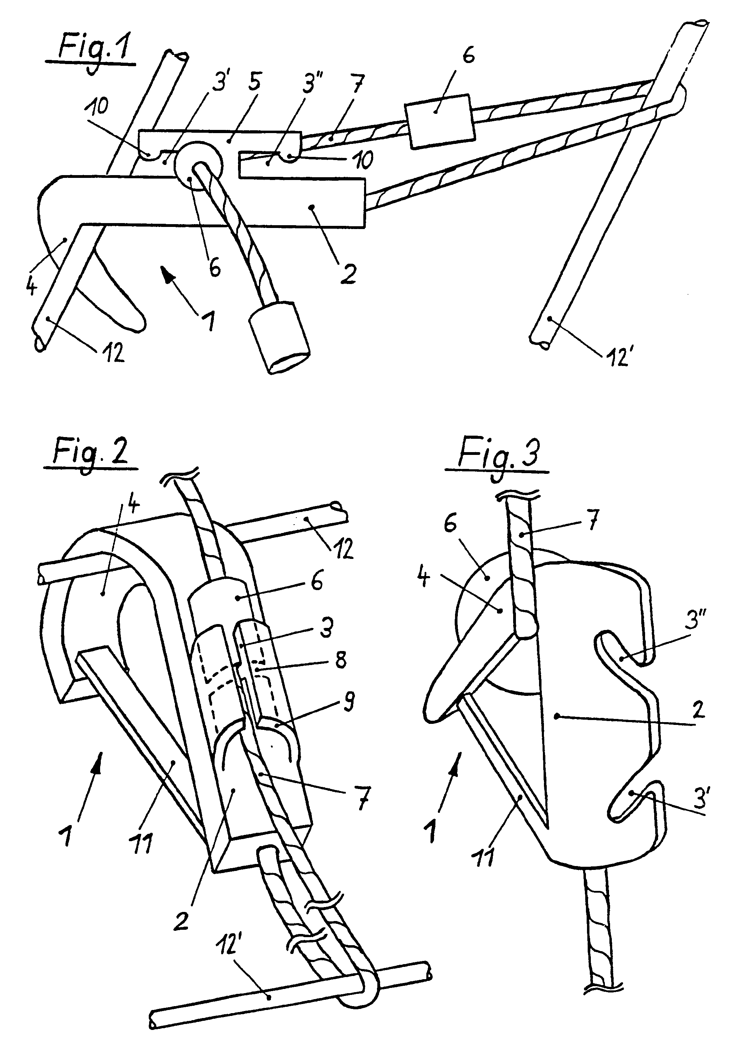

Figur 1 zeigt ein zwischen zwei Gegenständen 12, 12' (z.B. Drähte, Stangen oder ähnliches) gespanntes Befestigungsband. Dieses Befestigungsband besteht im wesentlichen aus einem Kopfteil, an welchem ein Haken 1 ausgebildet ist, aus einem Umschlingungsteil 7, welcher Rastenelemente 6 aufweist, und aus zwei entgegengesetzt ausgerichteten Einführungsschlitzen 3', 3", welche mittels einer am Hakenschaft 2 angeordneten Fortsetzung 5 gebildet werden. Sollen in einem Anwendungsbeispiel mit solch einem Befestigungsband zwei im Abstand voneinander befindliche Gegenstände 12, 12' zusammengespannt werden, so wird der Bereich zwischen Hakenschenkel 4 und Hakenschaft 2 mit dem Gegenstand 12 eingehakt, der Umschlingungsteil 7 um den anderen Gegenstand 12' herumgeschlungen und es kann in weiterer Folge der zwischen zwei Rastenelementen 6 befindliche Bereich des Umschlingungsteiles 7 in den Einführungsschlitz 3' eingeschoben werden, ohne daß der Umschlingungsteil 7 auch um Gegenstand 12 geschlungen werden muß.

Für den Fall, daß ein Einhaken des Hakens 1 mit dem Gegenstand 12 nicht möglich ist wird der Umschlingungsteil 7 in nicht näher dargestellter Weise auch um den Gegenstand 12 geschlungen und der Umschlingungsteil 7 zum Verankern in den Einführungsschlitz 3" eingeschoben, wobei der Hakenschenkel 4 hierbei als gut greifbares Zugorgan des Befestigungsbandes verwendbar ist. Die Einführungsschlitze 3', 3" sind mit einer Lösehemmungseinrichtung 10 ausgebildet, die ein unbeabsichtigtes Herausgleiten des Umschlingungsteiles 7 hemmen.

Fig. 2 zeigt den schematischen Schrägriß eines zwischen Gegenständen 12, 12' gespannten Befestigungsbandes, wobei der Haken 1 eine Einhaksicherung nach Karabinerart 11 aufweist. Der Einführungsschlitz 3, in welchen der zwischen zwei Rastenelementen 6 befindliche Bereich des Umschlingungsteiles 7 einschiebbar ist, mündet in eine am Hakenschaft 2 angeordnete Hülse 9. Die Hülse 9 ist zum beiderseitigen Einschieben eines Rastenelementes 6 ausgebildet und mit einer Querwand 8 ausgestattet, womit das Rastenelement 6 in der Hülse 9 verankerbar ist.

Fig. 3 zeigt im Schrägriß die schematische Abbildung eines Kopfteiles in Arbeitsstellung, mit zwei am Hakenschaft 2 angeordneten Einführungsschlitzen 3', 3" und mit einem Haken 1, welcher eine Einhaksicherung nach Karabinerart 11 aufweist. Der Umschlingungsteil 7 ist in einem auf die Rastenelemente 6 abgestimmten, zwischen dem Hakenschenkel 4 und dem Hakenschaft 2 gebildeten Bereich verankert.

Der in Fig. 3 dargestellte Kopfteil bietet dem Anwender die Möglichkeit, wahlweise den Umschlingungsteil 7 im Haken 1 zu verankern, zum Beispiel wenn hohe Abbindesicherheit des nicht näher dargestellten Abbindegutes gefordert ist, oder wahlweise den Haken 1 mit dem Abbindegut einzuhaken und den Umschlingungsteil 7 nach dem Herumschlingen im Einführungsschlitz 3" zu verankern.

Eine weitere Anwendungsmöglichkeit dieser Bauart besteht darin, daß zum Beispiel mit diesem Befestigungsband Material gebündelt und der Umschlingungsteil 7 in den Einführungsschlitz 3' eingeschoben wird, wobei anschließend das Befestigungsband mit dem gebündelten Material mit Hilfe des Hakens 1 an einem Spanndraht, Nagel oder Ähnlichem aufgehängt werden kann.

Es ist jedoch bei der vorliegenden Erfindung nicht stets vorgesehen, daß zwei entgegengesetzt ausgerichtete Einführungsschlitze am Hakenschaft ausgebildet sind.

Durch die Ausgestaltung des Kopfteiles mit einem Haken 1, welcher zum Beispiel mit dem Abbindegut in einfacher Weise in Eingriff gebracht werden kann, und mit einem am Hakenschaft 2 ausgebildeten Einführungsschlitz 3, in den der Umschlingungsteil 7 einschiebbar ist wird der Arbeitsvorgang des Verschnürens, Bündelns und Befestigens gegenüber dem Stand der Technik erheblich erleichtert.

## Patentansprüche

1. Befestigungsband zum Verschnüren und Befestigen mindestens eines Gegenstandes oder zum Bündeln mehrerer Gegenstände mit zumindest einem mit dem Abbindegut in Eingriff bringbaren, als Haken ausgebildeten Kopfteil (1), welcher einen Hakenschenkel (4) und einen ein Verrastungselement (3) tragenden Hakenschaft (2) aufweist, und mit einer ein oder mehrere Rastenelemente (6) aufweisenden, zugelastischen Umschlingungsteil (7), wobei die Rastenelemente (6) einzeln und lösbar an dem Verrastungselement des Kopfteiles verankerbar sind, dadurch gekennzeichnet, daß am Hakenschaft (2) des Kopfteiles (1) zumindest ein Einführungsschlitz (3, 3', 3") vorgesehen ist, der das Verrastungselement bildet, oder daß das Verrastungselement durch den Bereich zwischen Hakenschenkel (4) und Hakenschaft (2) gebildet wird, wobei der jeweils einem Rastenelement (6) benachbarte Bereich des Umschlingungsteiles (7) unter Zugbeanspruchung in den Einführungsschlitz (3, 3', 3") oder in den Bereich zwischen Hakenschenkel (4) und Hakenschaft (2) einführbar und verankerbar ist.

2. Befestigungsband nach Anspruch 1, dadurch gekennzeichnet, daß der Haken (1) am Hakenschaft (2) eine Fortsetzung (5) aufweist, die mit zumindest einem Einführungsschlitz (3', 3") ausgestattet ist, durch welchen jeder zwischen zwei Rastenelementen (6) befindliche Bereich des Umschlingungsteiles (7) unmittelbar einführbar ist.

3. Befestigungsband nach Anspruch 1, dadurch gekennzeichnet, daß der Einführungsschlitz (3) in eine am Hakenschaft (2) angeordnete, mit einer Querwand (8) versehene Hülse (9) mündet und die Hülse (9) zum beiderseitigen Einführen der Rastenelemente (6) ausgebildet ist.

4. Befestigungsband nach den Ansprüche 1 und 2, dadurch gekennzeichnet, daß der Hakenschaft (2) zwei sich gegenüberliegende Einführungsschlitze (3', 3") aufweist, die dermaßen ausgebildet sind, daß der Umschlingungsteil (7) in den einen Einführungsschlitz (3") in Richtung des Hakenschenkels (4) einführbar ist, und daß der Umschlingungsteil (7) in den anderen Einführungsschlitz (3') von der Richtung des Hakenschenkels (4) her einführbar ist.

5. Befestigungsband nach den Ansprüchen 1, 2 und 4, dadurch gekennzeichnet, daß der Einführungsschlitz (3) mit einer Lösehemmungseinrichtung (10) ausgestattet ist.

6. Befestigungsband nach den Ansprüchen 1 bis 5, dadurch gekennzeichnet, daß der Kopfteil (1) im Bereich zwischen Hakenschenkel (4) und Hakenschaft (2) eine Einhaksicherung (11) nach Karabinerart aufweist und daß die Rastenelemente (6) auch in diesem Bereich des Kopfteiles (1) verankerbar sind.

in the direction of the hook leg (4) and that said wrapping element (7) may be inserted into the other insertion groove (3') from the direction of the hook leg (4).

5. Fastening strap in accordance with claims 1, 2 and 4, characterized in that the insertion groove (3) is provided with a detachment prevention device (10).

6. Fastening strap in accordance with claims 1 to 5, characterized in that the head element (1) is provided with a fastening safety device (11) similar to a carbine swivel in the area between the hook leg (4) and the hook shank (2), and that the enlargements (6) may also be anchored in this area of the head element (1).

## Claims

1. Fastening strap for fastening or strapping at least one object or for bundling several objects, said fastening strap having at least one head element (1) in form of a clasp which engages with the object to be fastened, said head element comprising a hook leg (4) and a hook shank (2) carrying a locking member (3), said strap further comprising a wrapping element (7) which is elastic of extension and which comprises one or several enlargements (6), whereby said enlargements may individually and detachably be anchored in the locking member of said head element, characterized in that on the hook shank (2) of said head element (1) at least one insertion groove (3, 3', 3") is provided which forms the locking member, or that the locking member is formed by the area between the hook leg (4) and the hook shank (2), whereby the area of the wrapping element (7) located in the ultimate vicinity of one enlargement may, by means of tensile strain, be inserted and anchored in the insertion groove (3, 3', 3") or the area between the hook leg (4) and the hook shank (2).

2. Fastening strap in accordance with claim 1, characterized in that the hook (1) is provided with an extension (5) on the hook shank (2), said extension comprising at least one insertion groove (3', 3") by means of which any section of the wrapping element (7) located between two enlargements (6) may be inserted directly.

3. Fastening strap in accordance with claim 1, characterized in that the insertion groove (3) ends in a sleeve (9) arranged on the hook shank (2) and provided with a transversal wall (8), said sleeve being arranged for allowing the insertion of said enlargements (6) from both sides.

4. Fastening strap in accordance with claims 1 and 2, characterized in that the hook shank (2) comprises two opposedly arranged insertion grooves (3', 3") which are arranged in such a manner that the wrapping element (7) may be inserted into the one insertion groove (3")

## Revendications

1. Bande de fixation servant à ficeler et fixer au moins un objet ou à réunir plusieurs objets et comportant au moins une partie de tête (1), qui peut être accrochée au matériau de liaison et possède une branche formant crochet (4) et une tige de crochet (2) portant un élément de verrouillage (3), et une partie d'enroulement (7) apte à être étirée élastiquement et possédant plusieurs éléments d'encliquetage (6), les éléments d'encliquetage (6) pouvant être accrochés individuellement et de façon amovible sur l'élément de verrouillage de la partie de tête, caractérisé en ce que sur la tige de crochet (2) de la partie de tête (1), il est prévu au moins une fente d'insertion (3, 3',3"), qui forme l'élément de verrouillage, ou que l'élément de verrouillage est formé par la partie située entre la branche formant crochet (4) et la tige de crochet (2), la partie, respectivement voisine d'un élément d'encliquetage (6), de la partie d'enroulement (7) pouvant être introduite et accrochée moyennant l'application d'une traction, dans la fente d'insertion (3, 3',3") ou dans la partie située entre la branche formant crochet (4) et la tige de crochet (2).

2. Bande de fixation selon la revendication 1, caractérisée en ce que le crochet (1) possède, au niveau de sa tige (1), un prolongement (5) comportant au moins une fente d'insertion (3',3"), dans laquelle peut être introduit directement n'importe quel élément de la partie d'enroulement (7) situé entre deux éléments d'encliquetage (6).

3. Bande de fixation selon la revendication 1, caractérisée en ce que la fente d'insertion (3) débouche dans une douille (9) qui est disposée sur la tige (2) du crochet et comporte une paroi transversale (8) et que la douille (9) est agencée de manière à permettre l'introduction bilatérale des éléments d'encliquetage (6).

4. Bande de fixation selon les revendications 1 et 2, caractérisée en ce que

que la tige (2) du crochet possède deux fentes d'insertion opposées (3', 3"), qui sont agencées de telle sorte que la partie d'enroulement (7) peut être introduite dans une fente d'insertion (3") en direction de la branche formant crochet (4), et que la partie d'enroulement (7) peut être introduite dans l'autre fente d'insertion (3'), dans la direction de la branche formant crochet (4).

5. Bande de fixation selon les revendications 1, 2 et 4, caractérisée en ce que la fente d'insertion (3) comporte un dispositif (10) empêchant un dégagement.

6. Bande de fixation selon les revendications 1 à 5, caractérisée en ce que la partie de tête (1) possède, dans la zone située entre la branche formant crochet (4) et la tige (2) du crochet, une sûreté d'encliquetage (11) de type mousqueton, et que les éléments d'encliquetage (6) peuvent être également accrochés dans cette zone de la partie de tête (1).

Fig.1

Fig. 2

Fig. 3